# EUROPEAN PATENT SPECIFICATION

(11) **EP 0 782 095 B1**
(45) Date of publication and mention of the grant of the patent: **09.04.2003**
(21) Application number: 96120854.3
(22) Date of filing: 23.12.1996
(51) Int. Cl.: G06K 15/10, B41J 2/165

(54) **Ink jet printer and drive method thereof**
Tintenstrahldrucker und Steuerungsverfahren
Imprimante à jet d'encre et méthode de contrôle

(30) Priority: 26.12.1995 JP 33975195; 20.12.1996 JP 34221496
(43) Date of publication of application: 02.07.1997
(73) Proprietor: SEIKO EPSON CORPORATION, Tokyo 163 (JP)
(72) Inventor: Minowa, Masahiro, Suwa-shi, Nagano-ken (JP); Hanamura, Makoto, Suwa-shi, Nagano-ken (JP); Kobayashi, Naoki, Suwa-shi, Nagano-ken (JP)
(74) Representative: Hoffmann, Eckart, Dipl.-Ing.

(56) References cited:
- EP-A- 0 396 982
- US-A- 4 176 363
- PATENT ABSTRACTS OF JAPAN vol. 006, no. 039 (M-116), 10 March 1982 & JP 56 154065 A (FUJITSU LTD), 28 November 1981,

## Description

The present invention relates to a serial ink jet matrix printer and a method of driving the printer. More particularly, the invention relates to a method of purging (refreshing) the nozzles of the printer's print head.

In general, conventional ink jet matrix printers print on a recording medium by first storing into a pattern memory a bit map representing the pixel (dot) pattern to be printed, and by then selectively driving, based on the stored bit mapped data, pressure-generating elements such as piezoelectric elements or heat-emitting elements of the print head. The pressure generated by a pressure-generating element causes an ink droplet to be ejected from the associated ejection nozzle of the print head.

With ink jet printers it is common to perform a nozzle purging or refresh process before and/or in between such printing process. In the purging process ink is ejected from all nozzles to prevent nozzle clogging and maintain printer performance. In some cases such purging process is performed at regular intervals.

US-A-4,176,363 discloses an ink jet printer and drive method thereof, according to the preambles of claims 1 and 5, respectively, wherein a purging process is performed at regular intervals.

A further purging process is described in JP-A-3292148/1991 (family member of EP-A-0 396 982). More specifically, JP-A-3292148/1991 describes an ink jet printer comprising a selector for selecting either print data transferred to the printer or purging data generated by a purging data generator. This ink jet printer accomplishes either the normal printing process or a purging process by writing the selected data as bit mapped data into a pattern memory and controlling the print head in accordance with the stored bit mapped data.

The problems with this conventional method are described below.
(1) The purging data generated by the purging data generator is written into the pattern memory in the same manner as the print data. It is therefore necessary to write the purging data into the pattern memory for each purging process. This complicates the process and degrades the print data transfer efficiency if the purging process is frequently executed because of the increased frequency of data transfer interrupts and memory writing operations involved in each purging process. More specifically, this results in an overall reduction in the printing speed because print data cannot be received by the printer during the purging process.
(2) Because the purging data generated by the purging data generator is written to the pattern memory in the same manner as the print data, the printing process is interrupted and the purging data is written into the pattern memory each time the purging process is executed. This makes it necessary to delete the print data already stored in memory. To then resume the normal printing process after the purging process, the deleted print data must be written to memory again. This again complicates the process, degrades the print data transfer efficiency, and results in an overall reduction in the printing speed.
(3) While problems (1) and (2) above can be resolved by increasing the available capacity of the pattern memory, this would cause an increase in costs. With the popularization of color ink jet printers and high resolution multi-nozzle ink jet printers in recent years, the costs associated with increasing the on-board memory capacity are significant.
(4) In order increase the dot density and, thereby, the print quality, print heads having their ejection nozzles aligned in a row inclined with respect to the direction of relative motion between the print head and a recording medium, have been proposed, thereby effectively reducing the vertical pitch between the printed dots. When such a print head with diagonally arrayed ejection nozzles is used, however, both bit mapped data received by the printer and the purging data must be converted to diagonally arrayed bit mapped data, thus further degrading the printing speed.

The object of the present invention is therefore to resolve the above problems and to provide an ink jet printer and a method of driving it which allow purging data to be output to the print head without need to interrupt or repeat print data transfer to the printer to thereby improve the throughput of the printer.

This object is achieved with an ink jet printer as claimed in claim 1 and a method as claimed in claim 5, respectively. Preferred embodiments are subject-matter of the dependent claims.

According to the present invention, the purging process can be executed without storing the purging data to the pattern storage means. It is therefore possible to store only the print data to the pattern storage means, and there is no decrease in the print data transfer performance as a result of the purging process. Furthermore, because the purging data is not stored to the pattern storage means, the time required for the purging process itself is reduced, and the total printing speed including the purging process can therefore be improved. It is also not necessary to store the purging data in large sized RAM, making it possible to achieve a high speed purging process and printing with minimal RAM, and thus making it possible to provide a low cost high performance printer.

The pattern storage means can be implemented as RAM, but it is also possible to provide shift registers for each ejection nozzle, allocate the input data to each of the nozzles, and store the data to the corresponding shift registers. This makes it possible, by shifting the data stored to the shift registers in synchronism with the relative motion of the print head, to output the data to the print head without overloading the CPU while using a simple circuit configuration.

The ink jet printer of the present invention may also have a print head with an inclined array of nozzles and a pattern conversion means for converting the bit map stored in the pattern storage means to a pattern corresponding to such nozzle arrangement. Since, according to the present invention, the purging data is directly applied, not via the pattern storage means, they need not be converted by the pattern conversion means and the speed of the printing process can therefore be improved.

The print data stored into the pattern storage means may be either normal bit-mapped data for a serial printer but may also be so-called raster data suitable for a line printer. Raster data are received in units dot lines each dot line including the dots for a complete printing line. In case of raster data the data must be converted to dot column-unit data corresponding to vertically arrayed ejection nozzles. It is not necessary in this case to convert the purging data to column-unit data, and the speed of the printing process can therefore be improved.

This drive method according to the present invention makes it possible to quickly resume a printing process after interruption for a purging process because the print data for the interrupted printing process remains stored in the pattern storage means even when an purging process request is issued in the middle of a printing sequence.

It is preferable in this case to interrupt the printing process when the purging signal is input, store the position of the print head when the printing process is interrupted, and then move the print head to the purging position for the purging process. After the purging process is completed, the print head is returned to the stored print head position at which the print pattern was interrupted and the printing process resumed.

The present invention will become more fully understood from the detailed description of preferred embodiments given below in conjunction with the accompanying drawings wherein:
- Fig. 1: is a block diagram of an ink jet printer according to the present invention;
- Fig. 2: is an overview of the printer section of the ink jet printer shown in Fig. 1;
- Fig. 3: is a flow chart used to describe a preferred embodiment of the drive method according to the present invention;
- Fig. 4: is a circuit diagram showing a preferred embodiment of the controller 100 in Fig. 1, and also showing the pattern converter;
- Fig. 5: is a view of the array of ejection nozzles of an ink jet head according to one embodiment as seen from side A of printer section 10 in Fig. 2; and
- Fig. 6: is used to describe the method of converting columnar print data to an inclined data array by means of the drive circuit shown in Fig. 4.

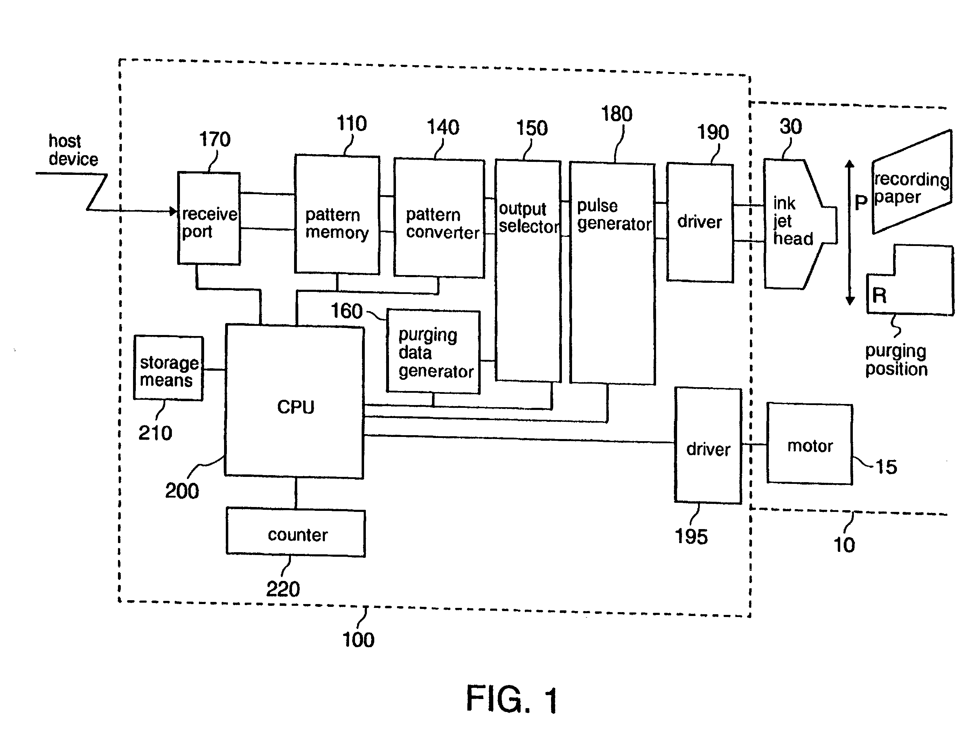

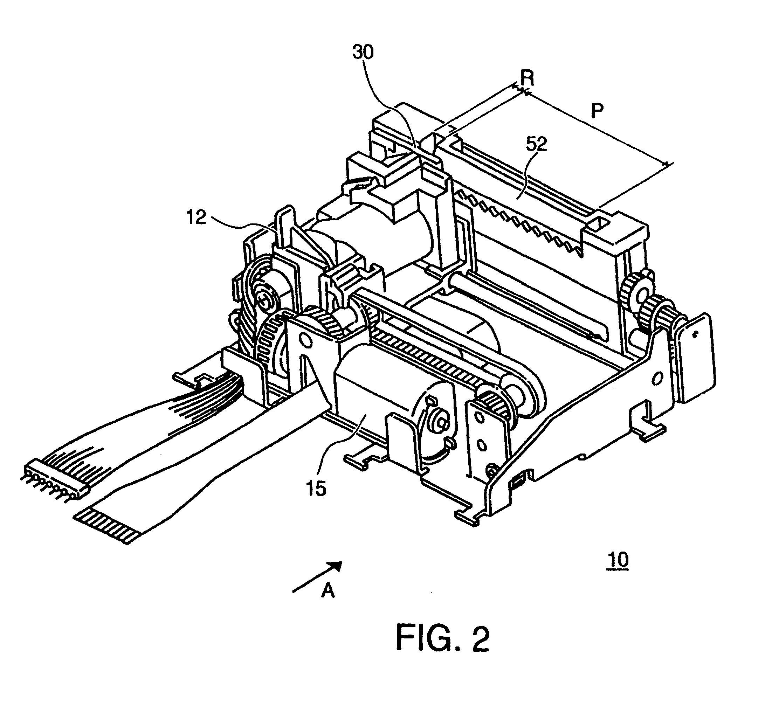

An embodiment of an ink jet printer according to the present invention is described below with reference to Fig. 1 to Fig. 3. Fig. 1 is a block diagram of the printer, and Fig. 2 is an overview of the printer section 10 in Fig. 1.

As shown in Fig. 1, the printer comprises printer section 10 and controller 100 for controlling printer section 10 based on command and print data received from a host device. The print data may be in the form of bit mapped data or in the form of character codes. In the first case the print data can be directly stored into the pattern storage means as received, while in the second case the character codes are first converted to bit mapped data by using a character generator etc.. As will be explained below, the print data may also be raster data as typically received by a line printer. The data stored in and read from the pattern storage means will be referred to as "print pattern data" hereinafter to distinguish from the print data received by the printer.

An example of the printer section 10 which may be employed in the present invention is shown in Fig. 2. It is substantially the same as the printer section shown in Fig. 2 of EP-A-0 659 568. Since the details of the structure and operation of this printer section are described in EP-A-0 659 568 such description will be omitted here and reference to that document is made instead.

Ink jet head 30 mounted on carriage 12 travels between purging position R and print area P. The width of print area P is approximately the same as the width of platen 52. When ink jet head 30 is in the print area P, ink is ejected to print on the recording paper. When ink jet head 30 is in the purging position R, ink is ejected to prevent the ejection nozzles from clogging. Note that this purging position R is normally used as the home position of carriage 12 so that when the power is turned on carriage 12 moves immediately to the purging position R and waits at the purging position R until a print command is received.

The controller 100 for controlling the printer section 10 is comprised as shown in Fig. 1 and described below.

The receive port 170 of the controller 100 is a serial or parallel communications port for receiving command and print data from the host device. The print data may be in the form of image data, i.e. bit mapped data, or in the form of character codes still to be converted to bit mapped data. Bit mapped data contained in the data received at receive port 170 or converted from received character code data is stored into pattern memory 110 (pattern storage means), which is typically but not necessarily a RAM or part of a RAM. When pattern memory 110 is RAM, the print pattern data stored at the address specified by printing operations processor 200 (which may be a CPU and will be referred to as CPU hereinafter) is sequentially forwarded to the next stage using an address signal and read/write signal.

The pattern converter 140 may be RAM or plural shift registers, and is used to convert the print pattern data stored in pattern memory 110 to a data pattern conforming to the arrangement of the ejection nozzles of ink jet head 30. If the print pattern data stored in the pattern memory already matches the nozzle pattern, pattern converter 140 is not needed. For example, if print data is received in the form of character codes and a character generator used to generate the print pattern data in a manner matching the arrangement of the ejection nozzles and to store print pattern data in a line buffer-type pattern memory, a pattern converter 140 is not needed.

The purging data generator 160 generates the purging data used for the nozzle refresh operation, i.e., the purging, and thus generates and sequentially outputs data causing ink to be ejected from all nozzles. The output selector 150 selects the output from either pattern converter 140 (pattern memory if no pattern converter is used) or purging data generator 160, and passes the selected output signal to the pulse generator 180.

Based on the output selected by output selector 150, pulse generator 180 supplies energizing pulses of an appropriate width to the pressure generating elements of the selected nozzles. These energizing pulses are output synchronized to timing pulses output from CPU 200 in conjunction with the movement of ink jet head 30.

Storage means 210 may comprise RAM used for storing the print commands contained in the data received from the host device and others and ROM for storing the programs controlling the above means. The CPU 200 controls the above means according to the control programs stored in storage means 210.

A timer or counter 220 starts counting from the completion of one purging process, and outputs an purging signal or sets a flag to announce when a predetermined period has passed.

Driver 190 boosts the voltage of the energizing pulses output from pulse generator 180 to drive ink jet head 30, and driver 195 drives motor 15 of printer section 10 used to move ink jet head 30; driver 195 is controlled by means of a drive signal output from CPU 200.

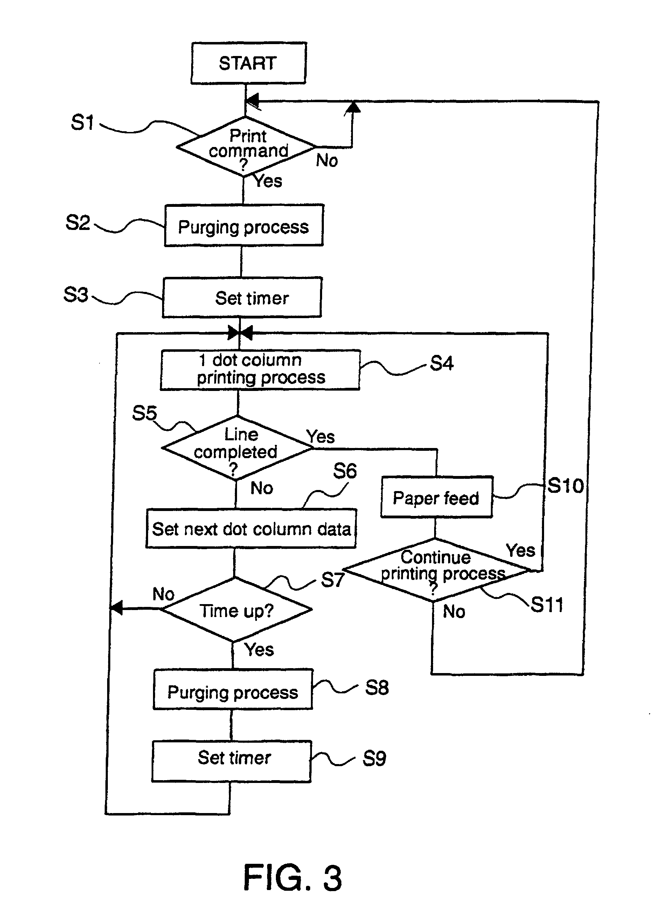

Fig. 3 is a flow chart of one example of the procedure used to execute the printing process and the purging process in accordance with the teachings of the present invention. To simplify the following description it is assumed that a stepping motor is used for motor 15.

After the power is turned on the ink jet printer waits for data to be supplied from the host device in step S1, which is a printer standby state. Once CPU 200 detects that data has been received and that the received data contains a print command, control proceeds to step S2 where the purging process is executed. This purging process is described below.

The location of the ink jet head 30 is first detected. If the ink jet head 30 is not at the purging position R, motor 15 is driven to move ink jet head 30 to the purging position R. The output from purging data generator 160 is then selected by output selector 150, and the purging data is output to pulse generator 180. A timing pulse is then input to pulse generator 180 from CPU 200 after the purging data is supplied thereto, and a predetermined ink volume is ejected from all nozzles of ink jet head 30 to accomplish the purging process. Note that motor 15 is not driven at this time, i.e., no drive pulses are applied to motor 15. After the purging process is completed counter 220 is initialized in step S3 and begins counting.

Because, according to the present invention, it is not necessary for the purging data to be stored into the pattern memory, the printer can continue to receive data from the host device during execution of steps S2 and S3 as long as there is sufficient capacity left in the pattern memory. More specifically, the speed of the overall printing process can be improved because data can continue to be received during the purging process.

When it is determined that a particular amount of print pattern data, one printing line, for example, has been stored into pattern memory 110 after timer counting starts in step S3, motor 15 is driven and one dot column is printed in step S4.

To determine the position of ink jet head 30 while driving motor 15, CPU 200 also counts the drive pulses applied to the motor. Reading print pattern data from pattern memory 110 during the printing process is accomplished based on this drive pulse count. More specifically, when pattern memory 110 is RAM, a read signal and an address signal specifying the print pattern data for the current position of the ink jet head 30 is applied to the RAM based on the drive pulse count.

Before ink jet head 30 enters the print area P, the print pattern data for one dot column is read from pattern memory 110 and output, via output selector 150, to pulse generator 180. The print pattern data for the first dot column is thus applied to the pulse generator 180. Energizing pulses are then generated in response to the timing pulse output synchronized to the drive pulse for motor 15, ink is ejected from the nozzles selected in accordance with the print pattern data for the first dot column, and the printing process for the first dot column is accomplished. After ink ejection, the print pattern data for the next column is applied in step S6, and the printing process is repeated to print the next dot column.

If at step S7 it is determined that the predefined time from the previous purging process has passed, control advances to step S8 and the purging process is executed. After the purging process is completed, the counter 220 is initialized again in step S9, thus restarting counter 220 and then looping back to the normal printing process.

The purging process executed in step S8 comprises the process described in step S2 above and an additional process for interrupting and then resuming the printing process. More specifically, when the purging process is initiated from step S8, the value, at the point the printing process is interrupted, of the counter (not shown) for counting the drive pulses is first saved to storage means 210, motor 15 is then driven to move ink jet head 30 to the purging position R, ink is then ejected to flush the nozzles, ink jet head 30 is then returned to the position at which the printing process was interrupted based on the previously saved counter value, and the printing process is then resumed. While the purging process is in progress, output selector 150 selects the output from purging data generator 160, and then switches to the pattern memory 110 after purging is completed. Because the print pattern data for the printing process that has been interrupted is kept in pattern memory 110 during the purging process, it is possible to resume the printing process without need to receive the same print data again.

When printing of one printing line is completed, control branches from step S5 to step S10, the paper is advanced, and it is then determined in step S11 whether or not to continue printing. If in step S11 data for the next printing line has been stored into pattern memory 110, control loops back to step S4 and printing continues. If there is no more print pattern data waiting, however, control loops back to step S1 and the printer resumes the standby state.

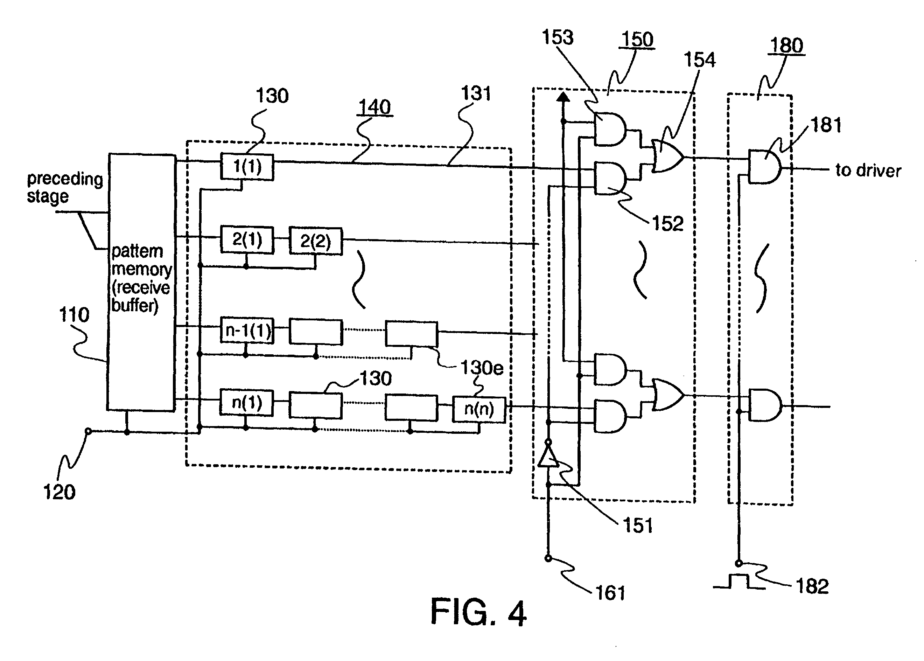

Application of the present invention to an ink jet printer in which the ejection nozzles of the ink jet head 30 are arrayed at an acute or obtuse angle to the direction of the printing line so as to reduce the vertical dot pitch is described below with reference to Fig. 4 to Fig. 6. It is to be noted, however, that the invention explained so far is applicable to an ink jet printer having an ink jet head with an array of ejection nozzles aligned perpendicularly to the printing line. In this case the pattern converter 140 can be omitted.

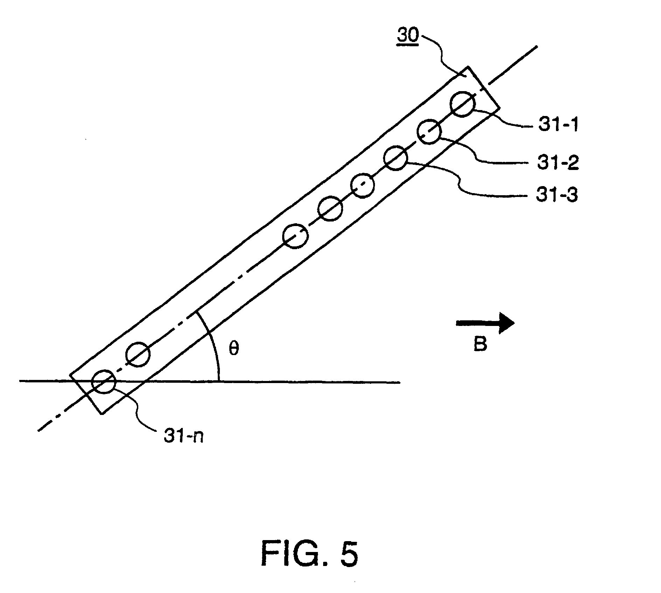

Fig. 5 is a view of the array of ejection nozzles of an ink jet head according to the present embodiment as seen from side A of printer section 10 in Fig. 2. As shown in Fig. 5 the ink jet head 30 comprises an in-line array of *n* nozzles 31-1 to 31-n sloped at an acute angle e to the direction B of ink jet head 30 travel, i.e., the printing line. To simplify the following description it is assumed that angle θ is 45° in this embodiment.

When the nozzles are thus arrayed at 45°, the distance between adjacent printed dots in a dot column is approximately 0.7 times (sine) the distance that would result if the nozzles having the same pitch were arrayed perpendicularly to the direction B. This results in an approximately 30% improvement in resolution.

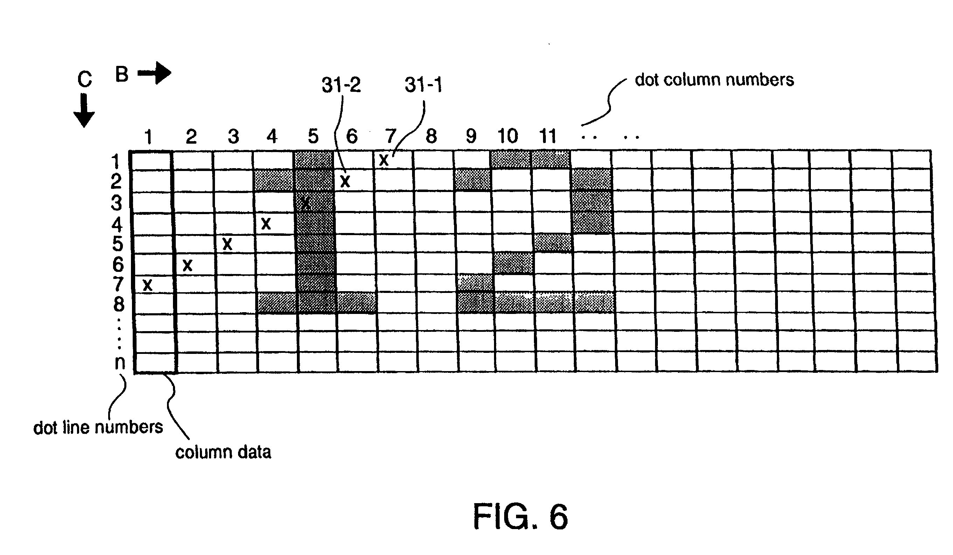

The method of converting the print pattern data for printing with a sloped nozzle array is described with reference to Fig. 6.

When *n* nozzles are arrayed perpendicularly to the direction B and the print pattern data (bits) for the *n* nozzles arrayed in the column direction C are sequentially, column by column, applied to the pulse generator 180 in Fig. 1 in synchronism with the head movement in the direction of arrow B in Fig. 6, a dot pattern corresponding to the pixel images in Fig. 6 will be printed on the recording medium. However, when the nozzle array of ink jet head 30 is inclined as shown in Fig. 5, and the print pattern data is applied to the pulse generator 180 in the same manner as with a perpendicular nozzle array, it is not possible to reproduce the pixel images as shown in Fig. 6.

For example, if nozzle 31-1 is positioned corresponding to column 7, the uppermost dot line will be printed by nozzle 31-1. At this time, however, nozzle 31-2 is located at column 6, and the data for one column before that of nozzle 31-1, i.e., column 6, must be printed by nozzle 31-2. More specifically, if nozzle 31-1 is to print the data of an x-th dot column, nozzle 31-i (2 ≤ i ≤ n) must print the data in the i-th dot line of the [x-(i-1)]-th dot column.

Fig. 4 is a circuit diagram showing details of parts of the block diagram of Fig. 1 suitable for an embodiment of the present invention, using an ink jet head 30 having an inclined nozzle array as shown in Fig. 5.

Shown in Fig. 4 are pattern memory 110, which also functions as a data buffer in this embodiment, pattern converter 140, output selector 150, and pulse generator 180. Note that receive buffer 110, pattern converter 140, output selector 150 and pulse generator 180 may be implemented using commonly available gate arrays.

The receive buffer/pattern memory 110 stores the print pattern data for one (vertical) dot column, outputs the data to the pattern converter 140 and reads the print pattern data for the next dot column from the preceding stage according to the latch signal 120 output from CPU 200.

The pattern converter 140, which converts these column print pattern data for printing with a sloped nozzle array, comprises shift register groups for *n* dot lines corresponding to the *n* nozzles. The shift register group for the first dot line contains one shift register 1(1), the shift register group for dot line 2 contains two shift registers 2(1),2(2), and the shift register for the *n*-th dot line contains n shift registers n(1)...n(n) in a straight line.

When latch signal 120 is input to each shift register 130, the data stored by that shift register is shifted to the next register and is replaced by the data stored in the preceding register, which is then held until the next latch signal 120 is received. As a result, these shift registers function as a buffer that also converts the print pattern data for a vertical dot column to the corresponding inclined print data array. The data stored to the last shift register 130e in each shift register group is output to output selector 150 by signal line 131.

As shown in the figure, output selector 150 comprises two AND gates 152 and 153 and one OR gate 154 per nozzle, and outputs to pulse generator 180 by means of selection signal 161 from CPU 200 either the data output from pattern converter 140 or the purging data generated inside output selector 150. Thus, in this embodiment, output selector 150 combines the data selection function with the purging data generation function.

When selection signal 161 is LOW, the NOT circuit 151 outputs HIGH to one of the two input terminals of AND gate 152. As a result, the output from pattern converter 140 applied to the other input terminal of AND gate 152 is passed on to pulse generator 180 via OR gate 154. When selection signal 161 is HIGH, the output from pattern converter 140 is not output to pulse generator 180, but the purging data (all set HIGH) is instead output from AND gate 153 via OR gate 154 to pulse generator 180. More specifically, in the latter case the data output to pulse generator 180 is data causing ink to be ejected from all nozzles.

A timing pulse with a predetermined pulse width is input to one input of AND gates 181 in pulse generator 180, and an energizing pulse is or is not output to the driver 190 according to the data selected by output selector 150.

The operation of the circuits thus comprised is described sequentially below.

A normal printing process is considered first with the selection signal 161 being LOW. The column print pattern data read from pattern memory 110 (receive buffer) is then latched by the shift registers of pattern converter 140 according to latch signal 120 from CPU 200. The column print pattern data is shifted sequentially through the following shift registers 130 by repeating this operation. For example, when this operation has been performed seven times, the data at the positions marked by "x" in Fig. 6 will be latched by the last shift register stage 130e.

Because the selection signal 161 output from CPU 200 is held LOW while the printing process executes, the data converted to an inclined pattern by pattern converter 140 is sequentially applied to pulse generator 180, and the corresponding energizing pulses are output to the driver 190. Note that the timing pulse 182 and latch signal 120 input to pulse generator 180 are synchronized with the movement of ink jet head 30.

CPU 200 stops outputting the latch signal 120 to interrupt the printing process for the purging process. The timing pulse 182 is also stopped during this process. The ink jet head 30 is then moved to the purging position R, the selection signal 161 is changed to HIGH, the purging data is applied to the pulse generator 180, and the timing pulse 182 is applied plural times to eject ink from and flush all nozzles.

Printing can then be resumed quickly after the purging process is completed because the print pattern data for the printing process interrupted for the purging process remains stored in the shift registers 130. Furthermore, because the purging data for the purging, i.e. the flushing operation, can be spontaneously generated with no relationship to the shifting operation of the shift registers 130 and the latch signal, the purging process can also be executed at high speed.

While the preferred embodiments of the invention have been described above with reference to converting dot column print pattern data to a data array matching an array of nozzles inclined to the direction of travel of the ink jet head 30, the invention not so limited and similar effects can be obtained even when the data is converted for other nozzle arrangements. For example, the present invention can also be used with ink jet printers comprising a pattern converter for converting raster data supplied in bit or byte units in dot line direction of a pixel image to a data array conforming to the columnar orientation of the ejection nozzles.

An ink jet printer according to the present invention can execute a purging process without storing the purging data to a pattern storage means. As a result, print data transfer efficiency does not deteriorate as a result of the purging process because only print data is stored to the pattern storage means. In addition, because the purging data is not stored to the pattern storage means, the time required for the purging process itself can be shortened, and the normal printing speed of the printer can thus be sustained. Because it is also not necessary to store the purging data to RAM, high speed purging and printing processes can be achieved with a smaller memory allocation, and a high cost-performance printer can therefore be provided.

## Claims

1. An ink jet printer comprising:
a print head (30) movable relative to a print medium and having a plurality of ejection nozzles (31-1 to 31-n),
input means (170) for receiving command and print data,
pattern storage means (110) for storing print pattern data corresponding to said print data,
output means (110, 200, 140) for sequentially reading and outputting the stored print pattern data in conjunction with the relative motion of the print head (30),
a purging data generator (160; 153) for generating purging data adapted to cause ink droplets to be ejected simultaneously from said plurality of ejection nozzles, and
selecting means (150) responsive to a selection signal (160) for selectively applying said print pattern data or said purging data to said print head (30),
said selecting means (150) has first input means for receiving said print pattern data read out from said pattern storage means (110; 140), second input means for receiving said purging data
**characterised in that** said selecting means has output means for selectively outputting either said print pattern data or said purging data, whereby in the case of outputting said purging data said print pattern data are kept stored in said pattern storage means (110).

2. The printer according to Claim 1 wherein said pattern storage means (140) comprises plural shift registers (1(1) to (n(n)) each associated with one of said ejection nozzles (31-1 to 31-n) and adapted to receive the print pattern data for the associated ejection nozzle.

3. The printer according to Claim 1 or Claim 2 wherein said pattern storage means (110, 140) is adapted to receive and store raster data.

4. The printer according to Claim 1 or Claim 2 wherein said ejection nozzles (31-1 to 31-n) are arranged such that each line connecting the nozzle centers of a respective pair of adjacent ejection nozzles is inclined at an acute or obtuse angle with respect to the direction of relative motion of said print head (30),
said printer further comprising pattern conversion means (140) for converting the print pattern data stored in said pattern storage means to a pattern corresponding to the inclined arrangement of the nozzles.

5. A method of driving an ink jet printer as defined in any one of the preceding claims, said method comprising:
(a) a printing process including
(a1) storing print pattern data,
(a2) moving said print head (30) relative to said print medium,
(a3) reading the stored print pattern data in conjunction with the relative motion of the print head, and
(a4) applying drive pulses corresponding to said print pattern data to said print head so as to selectively eject ink droplets from said ejection nozzles (31-1 to 31-n), and
(b) a purging process including
(b1) generating purging data, and
(b2) applying drive pulses corresponding to said purging data to said print head (30) so as to cause ejection of ink droplets from said plurality of ejection nozzles,
said method being **characterised by** the steps of
(c) selecting either said print pattern data stored in step (a1) or said purging data generated in step (b1) and applying drive pulses corresponding to the selected data to said print head (30), and
(d) if said purging data are selected, keeping the print pattern data stored in step (a1).

6. The method according to Claim 5 comprising the further steps of
(e) detecting a purging instruction signal,
(f) interrupting, in response to said detecting in step (e), the printing process, if any,
(g) storing information representing the current print head position,
(h) moving said print head (30) to a purging position (P),
(i) performing steps (b1) and (b2) while selecting said purging data in step (c),
(j) returning the print head to the position it had when the printing process was interrupted, and
(k) resuming the printing process.

7. The method according to Claim 6 wherein step (k) comprises performing steps (a2) through (a4) if step (f) interrupts the printing process after print pattern data are stored in step (a1) and before all stored print pattern data are printed in step (a4), and otherwise comprises performing steps (a1) through (a4).

8. The method according to any of Claims 5 to 7 wherein step (a1) comprises inputting said print pattern data for each nozzle into a respective shift register, shifting the data in each shift registers in conjunction with the relative motion of the print head (30) and applying the shifted data to said print head (30).

## Patentansprüche

1. Tintenstrahldrucker, der folgendes umfasst:
einen Druckkopf (30), der relativ zu einem Aufzeichnungsträger beweglich ist und eine Vielzahl von Druckdüsen (31-1 bis 31-n) hat,
Eingabemittel (170) zum Empfangen von Befehlen und Druckdaten,
Musterspeichermittel (110) zur Speicherung von mit besagten Druckdaten korrespondierenden Druckmusterdaten,
Ausgabemittel (110, 200, 140) zum sequentiellen Lesen und Ausgeben der gespeicherten Druckmusterdaten in Verbindung mit der relativen Bewegung des Druckkopfes (30),
einen Spüldatengenerator (160; 153) zur Erzeugung von Spüldaten, die daran angepasst sind, einen simultanen Ausstoß von Tintentropfen aus besagter Vielzahl von Druckdüsen zu veranlassen, und
Auswahlmittel (150), die auf ein Auswahlsignal (160) ansprechen, um wahlweise besagte Druckmusterdaten oder besagte Spüldaten in besagten Druckkopf (30) einzugeben,
wobei besagte Auswahlmittel (150) erste Eingabemittel zum Empfangen besagter Druckmusterdaten, die aus besagtem Musterspeichermittel (110; 140) ausgelesen werden, und zweite Eingabemittel zum Empfangen besagter Spüldaten haben,
**dadurch gekennzeichnet, dass** besagte Auswahlmittel Ausgabemittel zur wahlweisen Ausgabe von entweder besagten Druckmusterdaten oder besagten Spüldaten haben, wobei im Falle der Ausgabe besagter Spüldaten besagte Druckmusterdaten in besagtem Musterspeichermittel (110) gespeichert bleiben.

2. Drucker gemäß Anspruch 1, wobei besagtes Musterspeichermittel (140) eine Mehrzahl Schieberegister (1(1) bis (n(n)) umfasst, von denen jedes einer der besagten Druckdüsen (31-1 bis 31-n) zugeordnet ist und zum Empfang von Druckmusterdaten für die zugeordnete Druckdüse ausgelegt ist.

3. Drucker gemäß Anspruch 1 oder Anspruch 2, wobei besagtes Musterspeichermittel (110, 140) zum Empfangen und Speichern von Rasterdaten ausgelegt ist.

4. Drucker gemäß Anspruch 1 oder Anspruch 2, wobei besagte Druckdüsen (31-1 bis 31-n) derart angeordnet sind, dass jede die Zentren eines jeweiligen Paares benachbarter Druckdüsen verbindende Linie in einem spitzen oder stumpfen Winkel gegenüber einer relativen Bewegungsrichtung des besagten Druckkopfes (30) geneigt ist,
wobei besagter Drucker darüber hinaus Musterumwandlungsmittel (140) zur Umwandlung der in besagtem Musterspeichermittel gespeicherten Druckmusterdaten in ein Muster, das der geneigten Anordnung der Düsen entspricht, umfasst.

5. Verfahren zum Betreiben eines Tintenstrahldruckers nach einem der vorhergehenden Ansprüche, wobei das Verfahren folgendes umfasst:
(a) einen Druckvorgang, enthaltend
(a1) Speicherung von Druckmusterdaten,
(a2) Bewegung von besagtem Druckkopf (30) relativ zu besagtem Aufzeichnungsträger,
(a3) Lesen der gespeicherten Druckmusterdaten in Verbindung mit einer Relativbewegung des Druckkopfes, und
(a4) Anlegen von den besagten Druckmusterdaten entsprechenden Treiberimpulsen an besagten Druckkopf, um damit wahlweise Tintentropfen aus den besagten Druckdüsen (31-1 bis 31-n) auszustoßen, und
(b) eine Spülprozedur, enthaltend
(b1) Erzeugung von Spüldaten, und
(b2) Anlegen von den besagten Spüldaten entsprechenden Treiberimpulsen an besagten Druckkopf (30), um damit den Ausstoß von Tintentropfen aus besagter Mehrzahl von Druckdüsen zu bewirken,
wobei besagtes Verfahren durch folgende Schritte gekennzeichnet ist:
(c) Auswählen entweder besagter Druckmusterdaten, die im Schritt (a1) gespeichert wurden, oder besagter Spüldaten, die im Schritt (b1) erzeugt wurden, und Anlegen von den ausgewählten Daten entsprechenden Treiberimpulsen an besagten Druckkopf (30), und
(d) falls besagte Spüldaten ausgewählt wurden, Beibehalten der im Schritt (a1) gespeicherten Druckmusterdaten.

6. Verfahren gemäß Anspruch 5, folgende weitere Schritte umfassend:
(e) Erkennen eines Spülbefehlssignals,
(f) als Antwort auf das Erkennen im Schritt (e) Unterbrechen des Druckvorganges, falls vorhanden,
(g) Speichern von die gegenwärtige Position des Druckkopfes darstellender Information,
(h) Bewegen besagten Druckkopfes (30) in eine Spülposition (P),
(i) Ausführen der Schritte (b1) und (b2), während besagte Spüldaten im Schritt (c) ausgewählt werden,
(j) Zurückbringen des Druckkopfes in die Position, die er bei Unterbrechung des Druckvorganges eingenommen hatte, und
(k) Wiederaufnehmen des Druckvorganges.

7. Verfahren gemäß Anspruch 6, worin Schritt (k) die Ausführung der Schritte (a2) bis (a4) umfasst, wenn der Schritt (f) den Druckvorgang unterbricht, nachdem Druckmusterdaten im Schritt (a1) gespeichert wurden, und bevor alle gespeicherten Druckmusterdaten im Schritt (a4) gedruckt sind, und es ansonsten die Ausführung der Schritte (a1) bis (a4) umfasst.

8. Verfahren gemäß einem der Ansprüche 5 bis 7, wobei der Schritt (a1) die Eingabe besagter Druckmusterdaten für jede Düse in ein entsprechendes Schieberegister umfasst, Verschieben der Daten in jedem Schieberegister in Verbindung mit der relativen Bewegung des Druckkopfes (30) und Eingeben der verschobenen Daten in besagten Druckkopf (30).

## Revendications

1. Imprimante à jet d'encre comprenant :
une tête d'impression (30) pouvant se déplacer par rapport à un support d'enregistrement et ayant une pluralité de buses d'éjection (31-1 à 31-n), un moyen d'entrée (170) destiné à recevoir des données de commande et d'impression,
un moyen formant mémoire de modèles (110) destiné à stocker des données de modèle d'impression correspondant aux données d'impression,
un moyen de sortie (110, 220, 140) destiné à lire et à transmettre de manière séquentielle les données de modèle d'impression enregistrées en liaison avec le mouvement relatif de la tête d'impression (30),
un générateur (160 ; 153) de données de nettoyage destiné à générer des données de nettoyage adaptées pour provoquer l'éjection simultanée de goutteleties d'encre depuis la pluralité de buses d'éjection, et
un moyen de sélection (150) sensible à un signal de sélection (160) permettant d'appliquer de manière sélective les données de modèle d'impression ou les données de nettoyage à la tête d'impression (30),
le moyen de sélection (150) comprend un premier moyen d'entrée destiné à recevoir les données de modèle d'impression lues depuis le moyen formant mémoire de modèles (110 ; 140), un deuxième moyen d'entrée destiné à recevoir les données de nettoyage,
**caractérisée en ce que** le moyen de sélection comprend un moyen de sortie transmettant soit les données de modèle d'impression soit les données de nettoyage, ainsi, dans le cas d'une transmission des données de nettoyage, les données de modèle d'impression sont conservées dans le moyen formant mémoire de modèles (110).

2. Imprimante selon la revendication 1, dans laquelle le moyen formant mémoire de modèles (140) comprend plusieurs registres à décalage (1(1) à n(n)), chaque registre étant associé à l'une des buses d'éjection (31-1 à 31-n) et adapté pour recevoir les données de modèle d'impression de la buse d'éjection associée.

3. Imprimante selon la revendication 1 ou 2, dans laquelle le moyen formant mémoire de modèles (110, 140) est adapté pour recevoir et enregistrer des données de balayage.

4. Imprimante selon la revendication 1 ou 2, dans laquelle les buses d'éjection (31-1 à 31-n) sont disposées de telle façon que chaque ligne reliant les centres des buses d'une paire respective de buses d'éjection adjacentes soit inclinée selon un angle aigu ou obtus par rapport à la direction du mouvement relatif de la tête d'impression (30),
l'imprimante comprenant en outre un convertisseur de modèle (140) destiné à convertir les données de modèle d'impression enregistrées dans le moyen formant mémoire de modèles en un modèle correspondant à la disposition inclinée des buses.

5. Procédé de commande d'une imprimante à jet d'encre telle que définie dans l'une quelconque des revendications précédentes, le procédé comprenant :
(a) un processus d'impression comprenant
(a1) l'enregistrement des données de modèle d'impression
(a2) le déplacement de la tête d'impression (30) par rapport au support d'enregistrement,
(a3) la lecture des données de modèle d'impression enregistrées en liaison avec le mouvement relatif de la tête d'impression, et
(a3) l'application d'impulsions de commande correspondant aux données de modèle d'impression à la tête d'impression afin que les buses d'éjection (31-1 à 31-n) éjectent de manière sélective des gouttelettes d'encre, et
(b) un processus de nettoyage comprenant
(b1) la génération de données de nettoyage, et
(b2) l'application d'impulsions de commande correspondant aux données de nettoyage à la tête d'impression (30) afin que la pluralité de buses d'éjection éjecte des gouttelettes d'encre,
le procédé étant **caractérisé par** les étapes consistant à
(c) sélectionner soit les données de modèle d'impression enregistrées à l'étape (a1), soit les données de nettoyage générées à l'étape (b1) et appliquer des impulsions de commande correspondant aux données sélectionnées à la tête d'impression (30), et
(d) si les données de nettoyage sont sélectionnées, conserver les données de modèle d'impression enregistrées à l'étape (a1).

6. Procédé selon la revendication 5, comprenant les étapes supplémentaires consistant à
(e) détecter un signal de commande de nettoyage,
(f) interrompre, en réponse à la détection effectuée à l'étape (e), le processus d'impression s'il est en cours,
(g) enregistrer les informations représentant la position actuelle de la tête d'impression,
(h) déplacer la tête d'impression (30) vers une position de nettoyage (P),
(i) exécuter les étapes (b1) et (b2) tout en sélectionnant les données de nettoyage à l'étape (c),
(j) ramener la tête d'impression vers la position où elle se trouvait lorsque le processus d'impression a été interrompu, et
(k) reprendre le processus d'impression.

7. Procédé selon la revendication 6, dans lequel l'étape (k) comprend l'exécution des étapes (a2) à (a4) si l'étape (f) interrompt le processus d'impression après que les données de modèle d'impression ont été enregistrées à l'étape (a1) et avant que toutes les données de modèle d'impression enregistrées aient été imprimées à l'étape (a4) et comprend, sinon, l'exécution des étapes (a1) à (a4).

8. Procédé selon l'une quelconque des revendications 5 à 7, dans lequel l'étape (a1) comprend l'entrée des données de modèle d'impression pour chaque buse dans un registre à décalage respectif, le décalage des données dans chaque registre à décalage en liaison avec le mouvement relatif de la tête d'impression (30) et l'application des données décalées à la tête d'impression (30).
